# EUROPEAN PATENT SPECIFICATION

(11) **EP 1 943 288 B1**
(45) Date of publication and mention of the grant of the patent: **21.02.2018**
(21) Application number: 06812354.6
(22) Date of filing: 01.11.2006
(51) Int. Cl.: C08G 63/133, C08G 63/181, C08G 63/88, C08L 67/03, B01F 7/00, B01J 19/18, C08K 3/00, C08G 63/60, C08G 63/78, C08G 63/80, C08K 7/00, C08L 67/00

(54) **METHOD OF PREPARING WHOLLY AROMATIC POLYESTER**
VERFAHREN ZUR HERSTELLUNG VON VOLLAROMATISCHEM POLYESTER
PROCÉDÉ DE PRÉPARATION DE POLYESTER ENTIÈREMENT AROMATIQUE

(30) Priority: 02.11.2005 KR 20050104538; 17.11.2005 KR 20050109912; 17.11.2005 KR 20050109913
(43) Date of publication of application: 16.07.2008
(73) Proprietor: Shenzhen Wote Advanced Materials Co., Ltd., Nanshan District, Shenzhen (CN)
(72) Inventor: KIM, Mahn-Jong, Daejeon-city 305-761 (KR); YUN, Jong-Hwa, Daejeon-city 305-761 (KR); LEE, Youn-Eung, Daejeon-city 301-784 (KR); OK, Tae-Jun, Daejeon-city 305-762 (KR); JANG, Sun-Hwa, Daejeon-city 302-120 (KR); KIM, Hyun-Min, Daejeon-city 305-752 (KR)
(74) Representative: Harris, Becky
(86) International application number: PCT/KR2006/004515
(87) International publication number: WO 2007/052955

(56) References cited:
- EP-A1- 0 490 346
- JP-A- 05 070 569
- JP-A- 08 003 301
- JP-A- 10 219 085
- JP-A- 11 322 910
- JP-A- 2002 201 261
- US-A1- 2002 143 135
- DATABASE CA [Online] CHEMICAL ABSTRACTS SERVICE, COLUMBUS, OHIO, US; 13 April 1996 (1996-04-13), OOMOTO, SETSUO ET AL: "Manufacture of high-quality poly(ethylene terephthalate) with a high degree of polymerization", XP002721967, retrieved from STN Database accession no. 1996:212191 -& JP 8 003301 A (MITSUBISHI HEAVY INDUSTRIES, LTD., JAPAN) 9 January 1996 (1996-01-09)

## Description

### Technical Field

The present invention relates to a method of preparing wholly aromatic polyester, and more particularly to a method of preparing wholly aromatic polyester having excellent thermal and mechanical stability, excellent heat resistance, and improved fluidity, in which the amount of byproduct gas such as acetic acid is decreased and discoloration does not occur during manufacturing molded articles.

### Background Art

Recently, research on a method of preparing wholly aromatic polyester has been actively carried out. The wholly aromatic polyester may be a homo polymer prepared through polymerization of para hydroxy benzoic acid, a hetero polymer prepared through polymerization of para hydroxy benzoic acid and biphenol, a hetero polymer prepared through polymerization of para hydroxy benzoic acid and an aliphatic organic acid, or the like. Such condensation polymerization includes heating and stirring the reaction mixture under atmospheric or reduced pressure conditions, and removing excessive monomers and byproducts.

The wholly aromatic polyester forms liquid crystal without entanglement between its molecular chains in melt state due to its rigid molecular structure, and has excellent melt fluidity since the molecular chains are arranged to a flow direction by a shear. Due to such properties, the wholly aromatic polyester is not transformed nor foamed at a high deflection temperature under load and at a soldering temperature of higher than 260°C. Thus, the wholly aromatic polyester has been used as a material forming a connector, coil bobbin, and relay. However, byproduct gases are generated at a high molding temperature during molding articles. Such byproduct gases are mainly composed of acetic acid unreacted in a melt polymerization step and remained in the polyester product, and the byproduct gases generated during molding articles may erode a contact point of metal or cause poor insulation. Thus, research into decreasing the amount of byproduct gas has been carried out.

In particular, byproducts generated in the melt polymerization step of the polyester preparation process directly influence on the amount of byproduct gas in a final product, and thus the byproducts should be effectively removed to decrease the reaction time and stably and inexpensively obtain a high quality polymer. Particularly, a stirring process considerably influences the effectiveness of removing byproducts from the reaction mixture.

Conventionally, in a melt condensation polymerization process, various stirring methods such as a method of using a stirring impeller such as a paddle type, a turbine type, an anchor type, and a helical ribbon type stirring impeller to stir the reaction mixture with a predetermined rotation velocity; a method of progressively decreasing the rotational frequency according to viscosity increases of the reaction mixture accompanied with the condensation polymerization; a method of continuously decreasing the stirring velocity according to apparent melt viscosity increases from a step having a predetermined viscosity to the termination of the reaction; and a method of progressively using a reactor having a vertical stirring impeller, a reactor having a horizontal stirring impeller, and a reactor having a paddle type stirring impeller, have been used.

However, the viscosity of the reaction mixture increases in a condensation polymerization as the reaction progresses, and the reaction mixture has a property of a non-Newtonian fluid, and thus a Carvan phenomenon occurs in the reaction apparatus, and thereby preventing an effective stirring. That is, the melt viscosity of polyester is considerably low in a melt state under a high level of shear stress, but the viscosity drastically increases without shear stress or with a low level of shear stress. Thus, when the degree of polymerization reaches a certain level as a condensation polymerization progresses, a region to which the shear stress cannot be applied can be found due to geometry of the reactor. In the region to which the shear stress cannot be applied, fluidity drastically decreases, the molecular weight or the composition in this region becomes different from other regions in the reactor, and byproduct mainly composed of acetic acid cannot be smoothly removed from the reaction mixture, and thus polymer having uniform properties cannot be obtained.

A method to decrease the amount of byproducts by using an optimized amount of anhydrous acetic acid in the melt polymerization step has been reported.

In particular, additional and continuous research on removing byproducts of the melt polymerization in a solid state polymerization has been conducted to minimize the amount of byproduct gases in a final polymer product. That is, in order to remove byproduct, a prepolymer obtained in the melt polymerization is pulverized and introduced into a drawer type or rotation type heating device, and the heating device is heated to a predetermined temperature. Then, the temperature is maintained for a certain period of time and the reactor is cooled to produce a product. Here, the temperature maintained for a certain period of time is a holding temperature, and the certain period of time is a holding time. In this method, the amount of byproduct can be decreased by controlling temperature and time during the reaction.

However, when the holding temperature is too high or the holding time is too long in the solid state polymerization, the brightness of the product may decrease and a discoloration to red color may occur. Particularly, the discoloration becomes worse without an inert gas atmosphere in a solid state polymerization device.

As stated in the above, melt polyester forms liquid crystal without entanglement between its molecular chains in melt state due to its rigid molecular structure, and the molecular chains are arranged to a flow direction by a shear stress during moldings. Due to such properties of excellent melt fluidity and high heat resistance, polyester has been used as a material for forming small-sized and thin electric and electronic parts and components. Particularly, wholly aromatic polyester in which all of the main chains are formed of aromatic moieties has excellent heat resistant property, and thus it is used as a material for forming a coil bobbin which is melt soldered at a high temperature or supporting parts of heating devices and light and heat emitting devices of high temperature.

A method of preparing polyester including polymerizing monomers of melt condensation polymerization, such as aromatic hydroxyl carboxylic acids, aromatic diols, aromatic dicarboxylic acids with anhydrous acetic acid as an acylating agent by elevating the reaction temperature to obtain low molecular weight polymer and producing a high molecular weight polymer in a solid state has been proposed. Conventionally, a heating rate, a reaction temperature, and a holding time of a solid state reaction of the above method have been determined based on a flow temperature of the low molecular weight polymer. However, through the above described method, it is difficult to obtain wholly aromatic polyester polymer of high molecular weight having uniform properties, since adhesion occurs in the reactor, discoloration of the resin occurs due to remaining byproduct gases, and foaming occurs while molded articles are manufactured, although the obtained wholly aromatic polyester has excellent heat resistance and mechanical strength.

Particularly, in order to minimize the amount of byproduct gases in a high molecular weight polymer from a solid state polymerization, there has been a requirement on an improvement of the temperature elevation profile of into a drawer type or rotation type heating device containing the low molecular weight.

Meanwhile, a liquid crystal polyester resin has been widely used as an injection molding material for forming electronic parts due to its excellent heat resistant property and high melt fluidity. The liquid crystal polyester resin is classified into three groups of type I, type II, and type III depending on the heat resistant property [Refer to 'New Development of Liquid Crystal Polymer', CMC Corporation, 2004]. Type I liquid crystal polyester resin is composed of wholly aromatic components, and has high heat resistance. The Type I liquid crystal polyester resin can be classified into a material having the deflection temperature under load of 250°C or higher, and can be mainly used as a material for forming articles requiring high heat resistance such as an optical pick up part.

The heat resistance of the type I liquid crystal polyester can be increased according to the composition of monomers to the extent that the melting point is higher than 400°C and the deflection temperature under load is higher than 320°C since it has a rigid molecular structure or a linear molecular structure. However, the type I liquid crystal polyester having high heat resistance cannot be easily processed. A need to increase processibility, particularly fluidity, is increasing as the electronic parts become thin, small and light weight, but research thereon has seldom been carried out.

Japanese Patent Publication No. 1998-219085 discloses a resin mixture prepared by mixing two types of liquid crystal polyesters having different flow initiating temperatures to improve fluidity, and a resin composition including an inorganic filler used to produce a connector, and the like. However, such resin composition has poor heat resistant property.

Korean Patent Publication No. 2003-0070540, the invention of which is a similar to that disclosed in Japanese Patent Publication No. 1998-219085, is characterized by using a heterocyclic organic basic compound as a catalyst for polymerization of liquid crystal polyester.

In the polymerization of the two types of liquid crystal polyesters, at least one of acylation and esterification reactions is performed in the presence of the heterocyclic organic basic compound having at least two nitrogen atoms. Further, the object of Korean Patent Publication No. 2003-0070540 is limited to improve fluidity of liquid crystal polyester for a connector.

Japanese Patent Publication No. 2002-249647 discloses a method of preparing a resin composition with improved fluidity by blending wholly aromatic heat resistant liquid crystal polyester having the melting point of 310°C measured using a differential scanning calorimetry (DSC) and wholly aromatic heat resistant liquid crystal polyester having the melting point of less than 300°C. However, the resin composition is developed for a reflow soldering process, and thus thermal stability is low when the resin composition is used in a heat treatment process of high temperature for preparing optical pick up parts, and the like.

### Disclosure of Invention

### Advantageous Effects

The present invention is defined in the appended claims.

The present invention provides a method of preparing wholly aromatic polyester having uniform properties in which the amount of byproduct gases is reduced.

The present invention also provides a method of preparing wholly aromatic polyester used to form various molded articles having excellent mechanical and thermal properties.

The present invention also provides a method of preparing stably and inexpensively high quality wholly aromatic polyester having excellent thermal, mechanical and chemical resistance properties in which discoloration of a resin and foaming generated during manufacturing molded articles which occurs due to byproduct gases remaining in high molecular weight polymer can be prevented, and by removing byproducts effectively removed in melt polymerization step and a solid state polymerization. More particularly, through the method, the byproducts can be effectively removed in the solid state polymerization by controlling the range of reaction temperature, the heating rate and the reaction holding time, and thereby, discoloration due to heating, adhesion of microparticles, and foaming of the resin do not occur at a high temperature conditions.

### Description Of Drawings

The above and other features and advantages of the present invention will become more apparent by describing in detail exemplary embodiments thereof with reference to the attached drawings in which:
FIG. 1 illustrates a single plate type impeller used in a method of preparing wholly aromatic polyester according to an embodiment of the present invention;
FIG. 2 illustrates a double plate type impeller used in a method of preparing wholly aromatic polyester according to an embodiment of the present invention; and

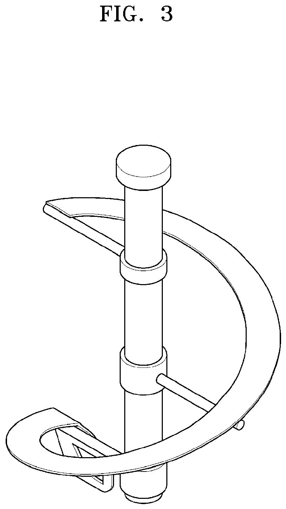

FIG. 3 illustrates a conventional single helical ribbon type impeller used in Comparative Examples 2 and 3.

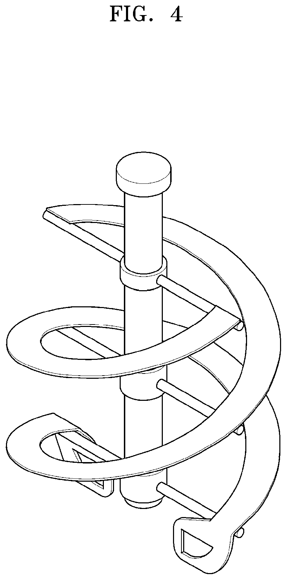

FIG. 4 illustrates a conventional double helical ribbon type impeller used in Comparative Examples 4 and 5.

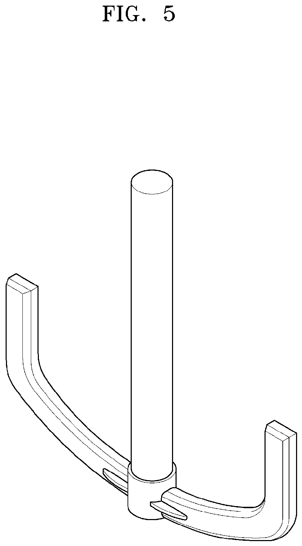

FIG. 5 illustrates a conventional anchor type impeller used in Comparative Example 6.

### Best Mode

Hereinafter, the present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention, as defined in the appended claims, to those skilled in the art.

In an embodiment of the present invention, a polyester resin is prepared by a two-stage polymerization of a melt polymerization and a solid state polymerization.

In a batch or continuous melt polymerization, a rectangular or trapezoidal single plate type or double plate type stirring impeller in which a length (L) to diameter (D) ratio of the stirring impeller is 1 ~ 3 : 1, and a distance between the bottom of the reactor and a lower portion of the stirring impeller is 1/100 - 1/15 times of the diameter (D) is used. In a reactor in which a turbulent stress is applied, acetylation is performed at 120 to 160°C, and esterification is performed at a heating rate of 0.5 to 1.5°C/min with a power per unit volume of 10 ∼ 60 kW/m³. The stirring power per unit volume of the reaction mixture is uniformly maintained until the viscosity of the reaction mixture reaches 1,000 to 10,000 Pa·s, and thus a prepolymer having a flowing temperature in the range of 200 to 300°C is obtained.

In more particular, a method of preparing wholly aromatic polyester according to an embodiment of the present invention includes:
a) melt polymerizing a monomer mixture preheated to 120∼160°C in a reactor having a rectangular or trapezoidal plate type stirring impeller through esterification reaction at a heating rate of 0.5 to 1.5°C/min with a power per unit volume of 10 to 60 kW/m³, until the temperature reaches a temperature of 300∼350°C, wherein a length (L) to diameter (D) ratio of the stirring impeller is 1 ∼ 3 : 1, and a distance between the bottom of the reactor and a lower portion of the stirring impeller is 1/100 ∼ 1/15 times of the diameter (D);
b) pulverizing the obtained polymer; and
c) solid state polymerizing the pulverized polymer.

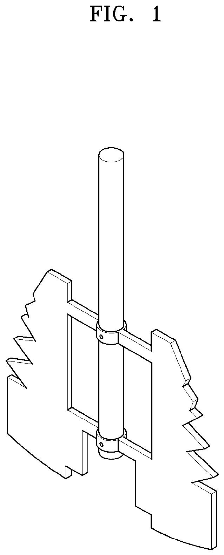

The plate type stirring impeller used in an embodiment of the present invention is shaped in a rectangle or trapezoid whose L/D ratio is 1 to 3, and ensures up-and-down flow, and thus a Carvan phenomenon, which is understood that agitation only occurs within the sweeping region of an impeller, can be prevented and shear stress provided by the impeller can be applied to the whole space in the reactor. FIG. 1 illustrates an example of such stirring impeller. However, the stirring impeller is not limited thereto and may have various shapes.

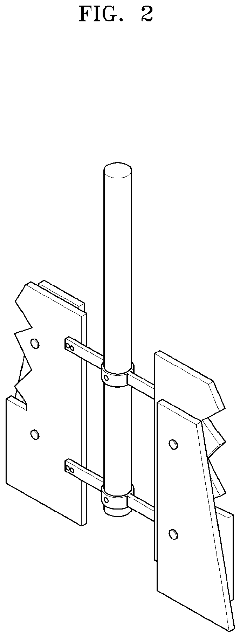

The stirring impeller which may be used in an embodiment of the present invention may be a double plate type stirring impeller having an auxiliary blade, as shown in Fig. 2. The impeller of Fig. 2 may apply stronger shear stress to the reaction mixture due to the difference between pressures at front and rear sides of the auxiliary blade. Accordingly, the melting viscosity of the polyester drastically decreases and the fluidity increases, and thus no stagnant region occurs in the reactor. However, FIG. 2 merely illustrates an example of the double plate type stirring impeller including an auxiliary blade, and is not limited thereto.

When the distance between the bottom of the reactor and a lower portion of the stirring impeller is 1/100 ∼ 1/15 times of the diameter (D) of the stirring impeller, reactants are rarely remained or adhered in the lower portion of the reactor when the reactants are discharged.

The plate type stirring impeller of an embodiment of the present invention may have a rectangular or circular hole (not shown).

By the use of the plate type stirring impeller of an embodiment of the present invention, the contact surface area between the anhydrous acetic acid and the particulate monomers is increased in the melt polymerization due to shear stress applied to the whole space of the reactor, and the temperature is uniform in the whole space of the reactor. In addition, byproduct of acetic acid generated during the acetylation can be easily discharged out of the reaction system by an up-and-down flow operation caused by the impeller.

In particular, in the process of preparing the wholly aromatic polyester according to an embodiment of the present invention, gas generated in the esterification can be sufficiently removed using a rectangular or trapezoidal plate type stirring impeller, wherein a length (L) to diameter (D) ratio of the stirring impeller is 1 ∼ 3 : 1, and a distance between the bottom of the reactor and a lower portion of the stirring impeller is 1/100 ∼ 1/15 times of the diameter (D) with a power per unit volume of 10 ∼ 60 kW/m³.

For performing an embodiment of the present invention in which an apparatus having functions varying a stirring velocity, for example, an inverter motor or other a continuous type speed variation device, such as, reduction gear may be necessary. In consideration of the costs and size of the device, the inverter motor is preferred.

In addition, a feedback controlling method is used to uniformly control the stirring power per unit volume of the reaction mixture by monitoring stirring torque and interlocking the stirring torque with rotational frequency.

The wholly aromatic polyester is prepared through dehydration/condensation reactions by mixing para hydroxy benzoic acid represented by Formula 1, biphenol represented by Formula 2, terephthalic acid represented by Formula 3, isophthalic acid represented by Formula 4, and anhydrous acetic acid represented by Formula 5.

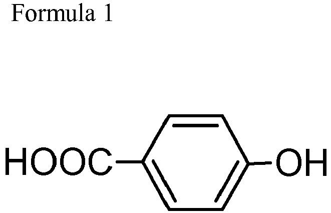

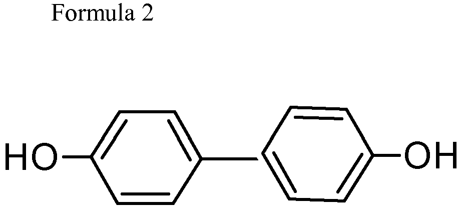

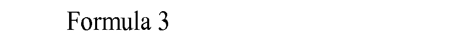

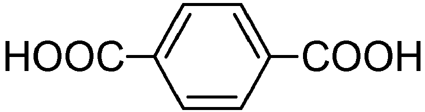

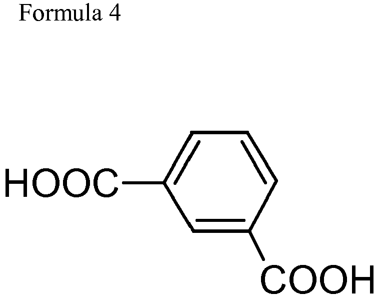

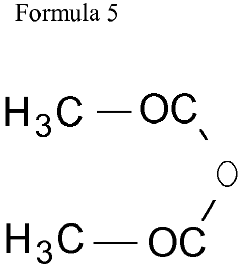

The method of preparing wholly aromatic polyester will be described in more detail.

First, para hydroxy benzoic acid, biphenol, terephtalic acid, isophthalic acid and anhydrous acetic acid are introduced into a reactor and mixed, and the reactor is preheated to the temperature of 120 to 160°C.

Next, the mixture is polymerized while the temperature of the reactor is elevated to 300 ∼ 350°C in a heating rate of 0.5-1.5°C/min and the reactor is stirred for uniform heating, and acetic acid, which is a byproduct, is removed under atmospheric distillation or reduced pressure distillation conditions (5∼10 Torr). Polymerization reaction may be carried out for various time, such as for 1 to 10 hours under the atmospheric pressure in an embodiment of the present invention. The obtained wholly aromatic polyester is pulverized and further polymerized in solid state. The flow temperature and the melting point of the obtained wholly aromatic polyester are measured. The obtained wholly aromatic polyester, glass fiber, etc. are mixed. Then, the mixture is extruded and pelleted, and properties such as the melting point, the temperature of deflection under load, and the amount of the byproduct gas are measured using methods below.
(1) The flow temperature was measured using a CFT-500 produced by Shimazu Corporation.
   When a resin which melts by heating at a heating rate of 4°C/min flowed through a nozzle having the diameter of 1 mm and the length of 10 mm under a weight of 100kg/cm² with a melting viscosity of 50,000 poise, the temperature of the resin was measured as the flow temperature.
(2) The melting point was measured using a differential scanning calorimetry (DSC) in which α-alumina was used as a standard material. A polymer was completely melted by increasing the temperature from room temperature to a temperature of the flow temperature + 40°C at a heating rate of 10°C/min, the temperature of the polymer was decreased to room temperature at a cooling rate of 10°C/min, and then the temperature was increased again to the temperature of the flow temperature + 40°C at a heating rate of 10°C/min. A temperature of top of the endothermic peak obtained therefrom was determined as a second melting point.
(3) The amount of byproduct gas was measured using following procedures. A molded article obtained using an injection molding of the wholly aromatic polyester resin composition and molding a dumbbell at a molding temperature of 130°C was cut into chips having the length of 5 mm, the width of 0.8 mm, and the thickness of 0.8 mm. 4 g of the chips was weighed, washed with distilled water, and introduced into a 25 cc vial which was washed and dried in a vacuum. The vial was sealed and heated in a hot air drier at 150°C for 24 hours, and gas was generated from the molded article. The vial was attached to a headspace gas chromatography of Hewlett-Packard Company, and the content of the vial was injected into a column having the length of 15 m using a filler at 150°C. At the same time the temperature of the column was increased from 80°C at a heating rate of 2°C/min, and gas was detected using a detector for 25 minutes. Helium was used as a carrier gas. The relative amount of acetic acid in the gas generated from the molded article was compared with the relative amount of a standard acetic acid.

According to an alternative method, a high heat resistant wholly aromatic polyester may be prepared. In more particular, this is a method of preparing a melt polyester resin having excellent heat resistant properties in which byproduct is effectively removed by controlling a heating rate and reaction holding time between the weight loss initiating temperature and the melting point of a low molecular weight polymer generated in a melt polymerization when high heat resistant wholly aromatic polyester is prepared using a solid state polymerization, adhesion does not occur, and discoloration due to heating does not occur.

In this alternative method of preparing high heat resistant polyester, high heat resistant wholly aromatic polyester having excellent properties is prepared by controlling a reaction temperature and a heating rate in a melt polymerization and a solid state polymerization in which para hydroxy benzoic acid represented by Formula 1, biphenol represented by Formula 2, terephthalic acid represented by Formula 3 are used as starting materials and anhydrous acetic acid represented by Formula 4 is used as an acylating agent.

Isophthalic acid represented by Formula 5 can further be used as a starting material.

This alternative method of preparing high heat resistant wholly aromatic polyester without discoloration and foaming includes:
a) performing acetylation by mixing para hydroxy benzoic acid represented by Formula 1, biphenol represented by Formula 2, and terephthalic acid represented by Formula 3 as starting materials, with anhydrous acetic acid represented by Formula 4 as an acylating agent;
b) removing byproduts, discharging products, and pulverizing the discharged products;
c) introducing pulverized low molecular weight polymers into a solid state reactor and increasing the temperature to a weight loss initiating temperature; and
d) performing a solid state reaction by increasing the temperature from the weight loss initiating temperature to a melting point.

Isophthalic acid represented by Formula 5 can further be mixed as a starting material in step a).

The weight loss initiating temperature may be in the range of 150 to 250°C, and the melting point may be in the range of 280 to 350°C. The reaction time for increasing the temperature of low molecular weight polymers from the weight loss initiating temperature to the melting point may be in the range of 4 to 7 hours and a heating rate may be in the range of 0.3 to 0.8°C /min. The reaction may be maintained at the melting point for 1 to 7 hours.

The solid state polymerization is performed while the byproducts generated according to the polymerization of low molecular weight polymer is removed, and thus a starting point of weight loss detected using a thermogravimetric analyzer was determined as a starting point of increasing temperature. When the polymerization is performed at less than the weight loss initiating temperature, the process for the polymerization is expensive since the reaction takes longer time. On the other hand, when the polymerization is performed at higher than the weight loss initiating temperature, a rapid temperature increase results in adhesion of the melt low molecular weight polymer. Thus, the staring temperature of the solid state polymerization may be set to the weight loss initiating temperature in which the polymerization of the low molecular weight polymer initiates. The finishing temperature of the solid state polymerization may be set to the melting point to prevent the low molecular weight polymer from being melt and adhered. When the polymerization is performed at higher than the melting point, adhesion occurs and the process for the polymerization is expensive since the reaction takes longer time. When the polymerization is performed at less than the melting point, the amount of gas generated from the high molecular weight polymer may increase, and properties of the polymer may become poor.

When the polymerization is performed within the temperature range, the amount of gas generated in the reaction is less than 1.3% by weight, and high heat resistant wholly aromatic polyester not becoming yellowish can be prepared. The amount of gas generated in the reaction may be less than 1.0% by weight.

Hereinafter, the alternative process of preparing the high heat resistant wholly aromatic polyester will be described in more detail.

Para hydroxy benzoic acid represented by Formula 1, biphenol represented by Formula 2, terephthalic acid represented by Formula 3, isophthalic acid represented by Formula 4, and anhydrous acetic acid represented by Formula 5 as raw materials are introduced into a reactor.

The temperature of the mixture is increased to 100 to 200°C to perform acylation while the mixture is stirred, and then the temperature is increased to 300 to 400°C to sufficiently mix the raw materials and perform polymerization. Then, acetic acid, a byproduct, is removed under atmospheric distillation or reduced pressure distillation conditions. Polymerization may variously occur according to reaction time. The reaction is performed for 0.5 to 10 hours and the pressure during the operation is in the range of 0 to 0.5 atm. The low molecular weight polymer obtained according to the melt condensation polymerization is pulverized and the obtained powder of the low molecular weight polymer having a uniform particle size is introduced into a drawer type or rotation type reactor. The reaction temperature is controlled between 150 and 350°C using two-stage heating of increasing the temperature to the weight loss initiating temperature of 150 to 250°C and to the melting point of 280 to 350°C, and the heating rate is controlled by increasing the temperature from the weight loss initiating temperature to the melting point at a heating rate of 0.3 to 0.8°C/min for 4 to 7 hours to prepare high heat resistant wholly aromatic polyester having excellent properties. The melting point of the obtained high heat resistant wholly aromatic polyester is measured.

The high heat resistant aromatic polyester is mixed with glass fiber, etc. and the mixture is extruded and pelleted.

Properties of the high heat resistant wholly aromatic polyester considerably vary according to the molar ratio between the starting materials. Properties of high molecular weight polymer considerably vary according to the reaction temperature and the heating rate in the solid state polymerization in which properties of resins are determined.

The temperature of the solid state polymerization may be increased to 150 to 250°C for 30 minutes to 1 hour by measuring the weight loss initiating temperature of the low molecular weight polymer using a thermogravimetric analyzer (TGA) in a first stage. Then, the temperature may be increased to 280 ∼ 350°C for 4 to 7 hour by measuring the melting point of the low molecular weight polymer using a differential scanning calorimetry (DSC) in a second stage, and the temperature may be maintained for 1 to 7 hours to obtain uniform properties.

The process of preparing the high heat resistant wholly aromatic polyester may be a batch type.

A high heat resistant liquid crystal polyester resin composition having improved fluidity may be used to form an optical pick up part by blending a high heat resistant liquid crystal polyester resin A with a high heat resistant liquid crystal polyester resin B in a proper ratio, the melting points of which are different from each other, and mixing the obtained liquid crystal polyester resin composition with fiber or flake inorganic filler.

A high heat resistant liquid crystal polyester resin composition having improved fluidity and used to form an optical pick up part is prepared by mixing 100 parts by weight of a resin mixture including 100 parts by weight of liquid crystal polyester resin A having the melting point of 350 to 450°C which is measured using a differential scanning calorimetry (DSC) and 10 to 100 parts by weight of liquid crystal polyester resin B having the melting point of 310 to 400°C, with 10 to 150 parts by weight of a fiber and/or flake inorganic filler, wherein the difference of the melting points between liquid crystal polyester resin A and liquid crystal polyester resin B is in the range of 10 to 70°C.

The melting point is measured using a differential scanning calorimetry (DSC), 10 mg of pulverized each liquid crystal polyester resin is heated from 50°C to a temperature 20°C higher than the temperature of top of the endothermic peak at a heating rate of 10°C/min under nitrogen atmosphere, and the temperature is maintained for 3 minutes (first stage). Thereafter, the temperature is decreased to 50°C at a cooling rate of 10°C/min (second stage). Then, when the temperature reaches 50°C, the temperature is increased again to 470°C at the same heating rate (third stage) and the measuring is finished. The temperature of the top of the endothermic peak present in the third stage is determined as the melting point.

The liquid crystal polyester resin A and the liquid crystal polyester resin B may respectively include at least two constituent units selected from the group consisting of compounds represented by Formula 6, Formula 7, Formula 8 and Formula 9, and the amount of the constituent unit of Formula 6 may be in the range of 40 to 80mol%, the amount of the constituent unit of Formula 7 may be in the range of 10 to 30mol%, the amount of the constituent unit of Formula 7/(the constituent unit of Formula 8 + the constituent unit of Formula 9) may be in the range of 0.9 to 1.1mol%, and the amount of the constituent unit of Formula 9/(the constituent unit of Formula 8 + the constituent unit of Formula 9) may be in the range of 0 to 0.5mol%.

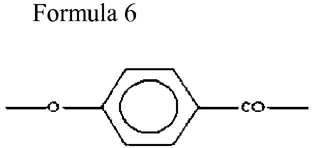

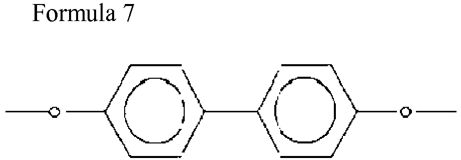

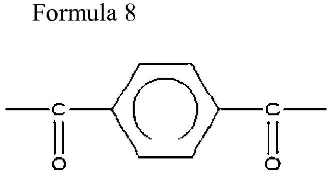

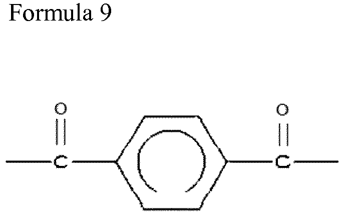

The fiber and/or flake inorganic filler may include at least one material selected from the group consisting of glass fiber, carbon fiber, mica, and talc, but is not limited thereto.

Molded articles obtained using injection molding of the resin composition and optical pick up parts obtained using the resin composition are possible.

According to another alternative method, there is a method of preparing wholly aromatic polyester resin including:
a) polymerizing at least two components selected from the group consisting of para hydroxy benzoic acid, biphenol, terephtalic acid, and isophthalic acid, and anhydrous acetic acid, removing byproducts, pulverizing products, and solid state polymerizing the pulverized polymer;
b) mixing 100 parts by weight of a resin mixture including 100 parts by weight of high heat resistant liquid crystal polyester resin A having the melting point of 350 to 450°C and 10 to 100 parts by weight of high heat resistant liquid crystal polyester resin B having the melting point of 310 to 400°C obtained in operation a), with 10 to 150 parts by weight of an inorganic filler, wherein the difference of the melting points between the high heat resistant liquid crystal polyester resin A and the high heat resistant liquid crystal polyester resin B is in the range of 10 to 70°C;
c) extruding and pelleting the mixture; and
d) molding the mixture.

The liquid crystal polyester resin used consists of liquid crystal polyester resin A having the melting point of 350 to 450°C and liquid crystal polyester resin B having the melting point of 310 to 400°C. The difference of the melting points between the liquid crystal polyester resin A and the liquid crystal polyester resin B is in the range of 10 to 70°C, and more preferably 20 to 70°C. When the difference of the melting points is less than 10°C, fluidity cannot be
effectively improved. Meanwhile, when the difference of the melting points is greater than 70°C, molding process cannot be easily performed due to pyrolysis of the liquid crystal polyester resin, and thus molded articles having excellent properties cannot be easily obtained.

The liquid crystal polyester resin A and the liquid crystal polyester resin B may respectively include at least two constituent units selected from the group consisting of compounds represented by Formula 6, Formula 7, Formula 8 and Formula 9, and the amount of the constituent unit of Formula 6 may be in the range of 40 to 80mol%, the amount of the constituent unit of Formula 7 may be in the range of 10 to 30mol%, the amount of the constituent unit of Formula 7/(the constituent unit of Formula 8 + the constituent unit of Formula 9) may be in the range of 0.9 to 1.1mol%, and the amount of the constituent unit of Formula 9/(the constituent unit of Formula 8 + the constituent unit of Formula 9) may be in the range of 0 to 0.5mol%.

When the amount of the constituent unit of Formula 6 is less than 40mol% in the liquid crystal polyester resin, heat resistant property may be insufficient. On the other hand, when the amount of constituent unit of Formula 6 is greater than 80mol%, the processibility may become poor. The amount of the constituent unit of Formula 6 may be in the range of 45 to 65mol%, such as wherein the amount of the constituent unit of Formula 6 in the liquid crystal polyester resin A is in the range of 45 to 55mol%, and the amount of the constituent unit of Formula 6 in the liquid crystal polyester resin B may be in the range of 55 to 65mol%.

When the amount of the constituent unit of Formula 7 in the liquid crystal polyester resin is less than 10mol%, the processibility may become poor, and when the amount of the constituent unit of Formula 7 is greater than 30mol%, the heat resistant property may become insufficient.

In addition, when the amount of the constituent unit of Formula 7/(the constituent unit of Formula 8 + the constituent unit of Formula 9) is less than 0.9 or greater than 1.1, the polymerization of the liquid crystal polyester resin may not be sufficiently performed, physical properties thereof may become poor. When the amount of the constituent unit of Formula 9/(the constituent unit of Formula 8 + the constituent unit of Formula 9) is greater than 0.5, the heat resistant property of the liquid crystal polyester resin may become insufficient.

In the ratio of the liquid crystal polyester resin A and the liquid crystal polyester resin B, 100 parts by weight of liquid crystal polyester resin A is blended with 10 to 100 parts by weight of liquid crystal polyester resin B. When the amount of the liquid crystal polyester resin B is less than 10 parts by weight, the fluidity may not be sufficiently improved. Meanwhile, the amount of the liquid crystal polyester resin B is greater than 100 parts by weight, the heat resistant property may considerably decrease although the fluidity can be improved.

The amount of the inorganic filler may be 10 to 150 parts by weight based on 100 parts by weight of the liquid crystal polyester resin composition.

An average fiber diameter of the fiber inorganic filler may be in the range of 5 to 20 µm, and preferably in the range of 5 to 15 µm. When the average fiber diameter is less than 5 µm, the fluidity and heat resistance may not be sufficiently improved. Meanwhile, when the average fiber diameter is greater than 20 µm, the appearance of molded articles cannot be in good condition and uniform distribution cannot be easily obtained although the heat resistance can be improved by a similar level compared to the heat resistance which is obtained when the average fiber diameter is less than 20 um. An average length of the fiber is in the range of 10 to 300 µm, and may be 50 to 300 um. When the average length of the fiber is less than 10 µm, the fluidity and heat resistance may not be sufficiently improved. Meanwhile, when the average length of the fiber is greater than 300 µm, the fluidity may not be effectively improved, the appearance of molded articles is not in good condition, and uniform distribution cannot be easily obtained. The fiber inorganic filler may be glass fiber, silica alumina fiber, alumina fiber, or carbon fiber, but is not limited thereto.

An average particle size of the flake inorganic filler may be in the range of 1 to 20 µm, and preferably 5 to 20 µm. When the average particle size is less than 1 µm, the fluidity and heat resistance may not be sufficiently improved. Meanwhile, when the average particle size is greater than 20 µm, the appearance of molded articles cannot be in good condition and uniform distribution cannot be easily obtained although the fluidity and heat resistance can be improved by a similar level compared to the fluidity and heat resistance obtained when the average fiber diameter is less than 20 µm. The flake inorganic filler may be mica, talc, graphite, or a mixture thereof, but is not limited thereto.

A conventionally used additive such as an antioxidant, a thermal stabilizer, a UV absorber, a lubricant, a release agent, a dyestuff, a pigment, an antistatic agent, a surfactant, and a flame retardant may further be added to the resin composition.

The alternative process of preparing the high heat resistant aromatic liquid crystal polyester resin will be described in detail.

First, at least two components selected from the group consisting of para hydroxy benzoic acid, biphenol, terephtalic acid, and isophthalic acid, and anhydrous acetic acid and an organic metal salt are supplied to a reactor and mixed, and the reactor is preheated to the temperature of 130 to 160°C. Here, the amount of the organic metal salt is in the range of 0.005 to 0.05% by weight based on the total weight of para hydroxy benzoic acid, biphenol, terephtalic acid and isophthalic acid. Then, the temperature is increased to 300 to 350°C to sufficiently mix the components and perform polymerization, and acetic acid, a byproduct, is removed using a distillation. Polymerization may variously occur according to reaction time. The reaction is performed for 0 to 10 hours and the pressure during the operation is in the range of 0 to 0.5 atm. The obtained high heat resistant property aromatic polyester is pulverized and a solid state polymerization is performed in a solid state reactor.

A blend of the liquid crystal polyester resin composition can be prepared using any known method and using the obtained liquid crystal polyester resin A, the obtained liquid crystal polyester resin B, an inorganic filler, and additives.

Liquid crystal polyester resin A, liquid crystal polyester resin B, a fiber and/or flake inorganic filler, a stiffener, a releasing agent, a thermal stabilizer, etc. are respectively introduced into a melt mixer, or such materials are premixed using a mortar, a Henshell mixer, a ball mill, a ribbon blender, or the like. Further, the liquid crystal polyester resin A and the fiber or flake inorganic filler, and the liquid crystal polyester resin B and the fiber or flake inorganic filler are separately introduced into a melt mixer to form pellet.

Optical pick up parts can be obtained by molding the obtained liquid crystal polyester resin composition. For example, injection molding may further be included in the molding method. The temperature during molding may be 10 to 80°C higher than the melting point of the liquid crystal polyester. When the molding temperature is less than the temperature above, fluidity may decrease, and molding quality may become poor. On the other hand, the molding temperature is higher than the temperature above, the properties of resin and the optical pick up parts become poor.

The present invention will now be described in detail with reference to the following examples. The examples are provided for illustrative purposes only and should not be construed as limiting the scope of the present invention, as defined in the appended claims.

### Example

### (Preparation of wholly aromatic polyester using a stirring impeller with reduced byproduct)

### Example 1

A double plate type stirring impeller (Hado Co. Ltd.) in a trapezoid shape having the length of 30 cm and the diameter of 15 cm, wherein a L/D ratio of the stirring impeller was 2 and a distance between the bottom of the reactor and a lower portion of the stirring impeller was 1 cm was installed in a 10 liter reactor. 1797 g of para hydroxy benzoic acid, 808 g of biphenol, 540 g of terephthalic acid and 180 g of isophthalic acid were introduced into the reactor, and 1.06 equivalent weight of anhydrous acetic acid was introduced into the reactor and the reactor was stirred at a power per unit volume of 20 kW/m³ .

The mixture was polymerized until a viscosity in the reactor reached a predetermined level of 5000 Pa·s, and acetic acid, a byproduct, was distilled under atmospheric distillation conditions. Then, the mixture was discharged, pulverized, and introduced into a solid state reactor to prepare wholly aromatic polyester. The obtained wholly aromatic polyester and glass fiber were mixed, and the mixture was extruded and pelleted. As a result of measuring temperature, the flow temperature was 352°C and the melting point was 360°C. The amount of generated byproduct gas was 5.

### Example 2

An experiment was performed in the same manner as in Example 1, except that the power per unit volume was 15 kW/m³ . The results of the flow temperature, the melting point, and the amount of generated byproduct gas are shown in Table 1.

### Comparative Examples 1 to 6

A high heat resistant aromatic polyester was prepared in the same manner as in Example 1, except that a stirring power and a type of impeller was changed as shown in Table 1. The results of the flow temperature, the melting point, and the amount of the byproduct gas are shown in Table 1.

### Comparative Example 7

An experiment was performed using the same type of stirring impeller as Example 1, wherein the L/D ratio was 4.

**Table 1**

| | Type of stirring impeller | L/D | Power per unit volume (kW/m³) | Flow temperature (°C) | Melting point (°C) | Amount of byproduct gas (relative) |
|---|---|---|---|---|---|---|
| Example 1 | Double trapezoid plate | 2 | 20 | 352 | 360 | 5 |
| Example 2 | Double trapezoid plate | 2 | 15 | 354 | 363 | 12 |
| Comparative Example 1 | Single helical ribbon | - | 20 | 355 | 362 | 54 |
| Comparative Example 2 | Single helical ribbon | - | 30 | 354 | 362 | 48 |
| Comparative Example 3 | Double helical ribbon | - | 20 | 357 | 361 | 25 |
| Comparative Example 4 | Double helical ribbon | - | 25 | 355 | 362 | 23 |
| Comparative Example 5 | anchor | - | 20 | 280 | 300 | 87 |
| Comparative Example 6 | Single helical ribbon + anchor | - | 20 | 354 | 360 | 22 |
| Comparative Example 7 | Double trapezoid plate | 4 | 20 | 361 | 359 | 24 |

As shown in Table 1, the amount of generated byproduct gas was considerably low in Example 1 in which the power per unit volume was 20 kW/m³ . The amount of the byproduct gas of Example 1 is far lower than that of Comparative Examples having the same level of the power per unit volume such as Comparative Example 1 using a single helical ribbon, Comparative Example 3 using a double helical ribbon, and Comparative

Example 5 using an anchor. In addition, when the power per unit volume was increased as shown in the result of Comparative Example 2 or 4 in Table 1, the amount of byproduct gas was higher than that of Example 1 in which a double trapezoid plate impeller was used. When the power per unit volume was decreased to 15kW/m³ as shown in the result of Example 2 in Table 1, the amount of byproduct gas was far less than that of Comparative Examples 1 to 7.

In addition, in Comparative Example 5, the reaction mixture between the stirring impeller and the reactor wall to which shear stress was applied has fluidity and thus could be discharged after the reaction finished, but plenty of reaction mixture was adhered to the region between the central axial of the stirring impeller and the impellers to which the shear stress is not applied since the fluidity decreased, and a rod climbing effect or a Weissenberg effect occurred.

Further, when a double trapezoid plate type impeller having the same structure as that of Example 1, in which the L/D ratio was altered, was used in Comparative Example 7, the amount of byproduct gas increased, and when the distance between the bottom of the reactor and a lower portion of the stirring impeller was increased, the amount of byproduct gas increased.

The present invention provides a method of preparing a prepolymer in the melt polymerization of the wholly aromatic polyester by effectively stirring the reaction mixture, and thus a method of preparing wholly aromatic polyester in which the amount of byproduct is decreased is provided.

Further, polyester having stable properties can be prepared and the manufacturing process can be inexpensive due to the reduced manufacturing time by applying the present invention to industrial fields.

In a conventional stirring method, excessive monomers could not be sufficiently removed due to poor stirring efficiency, and the polymerization was performed too slowly. However, in an embodiment of the present invention, the stirring efficiency was increased using an impeller having a specific range of properties, and thus the power per unit volume was uniformly maintained until the polymerization is terminated. The uniform power per unit volume could prevent the viscosity of the reaction mixture from increasing, effectively remove excessive monomers, and increase the reaction rate. Therefore, the reaction time could be decreased and a high quality polyester polymer could be obtained.

In addition, acetic acid could be discharged fast and the amount of acetic acid discharged out of the reaction system could be increased since the up-and-down fluidity increased using the plate type stirring impeller of the present invention and thus the surface of the reaction mixture could be sufficiently renewed. As a result, the melt polymerization time decreased due to the increased polymerization rate, the amount of remaining byproducts mainly composed of acetic acid decreased in the finally obtained wholly aromatic polyester.

### (Preparation of high heat resistant wholly aromatic polyester by controlling a heating rate and a holding time)

The properties such as the melting point and the heat resisting temperature and the amount of generated gas were measured using processes below.
(1) The weight loss initiating temperature was measured using a thermogravimetric analyzer (TGA).
   The starting point of the weight loss was detected by increasing the temperature from 40 to 700°C at a heating rate of 10°C/min.
(2) The melting point was measured using a differential scanning calorimetry (DSC). A temperature of top of the endothermic peak obtained by increasing the temperature from 40 to 450°C at a heating rate of 20°C/min was determined as the melting point.
(3) The heat resisting temperature was measured using a heat deflection temperature tester (HDT) in a method of ASTM D648.
(4) The discoloration was detected using a whiteness analyzer.
(5) The amount of generated gas was measured by cutting a molded article obtained using an injection molding apparatus into pieces, and introducing the cut molded article pieces into a 25 cc bottle, drying in a hot air dryer for 24 hours to generate gas. Then, a gas chromatography was used by increasing the temperature of column from 80 to 260°C at a heating rate of 2°C/min and the detected peak was compared with the peak of a prepared standard acetic acid.

### Reference Example 3

171 g of para hydroxy benzoic acid, 114 g of biphenol, and 100 g of terephtalic acid were introduced into a 1 liter reactor having a stirring device, a nitrogen gas inlet, a thermometer and a reflux condenser, and nitrogen was injected to substitute the air in the reactor. 264 g of anhydrous acetic acid was added thereto, and the reactor was stirred at a rotational frequency of 200 rpm. The temperature of the reactor was increased to 150°C for 30 minutes, and acetylation was performed for 3 hours. Then, the temperature was increased to 340°C for 5 hours while acetic acid, a byproduct, was discharged, and the temperature was maintained for 30 minutes, and then the products was discharged and pulverized. The weight loss initiating temperature and the melting point of the obtained low molecular weight polymer were measured, and the low molecular weight polymer was introduced into a solid state reactor, and the temperature was increased to the weight loss initiating temperature of 200°C for 30 minutes, and to the melting point of 330°C for 6 hours, and the temperature was maintained for 4 hours to obtain a high molecular weight polymer.

The obtained high heat resistant wholly aromatic polyester was mixed with glass fiber, etc. and the mixture was extruded and pelleted. Then, properties such as the melting point and the heat resisting temperature were measured.

The melting point was 410°C, and the heat resisting temperature was 385°C.

### Reference Examples 4 to 6

A high heat resistant wholly aromatic polyester was prepared in the same manner as in Example 3, except that the reaction holding time during the solid state reaction was altered as shown in Table 2. The measured melting point and the heat resisting temperature are shown in Table 2.

### Reference Example 7

215 g of para hydroxy benzoic acid, 95 g of biphenol, 63 g of terephtalic acid, and 21 g of isophthalic acid were introduced into a 1 liter reactor having a stirring device, a nitrogen gas inlet, a thermometer and a reflux condenser, and nitrogen was injected to substitute the air in the reactor. 275 g of anhydrous acetic acid was added thereto, and the reactor was stirred at a rotational frequency of 200 rpm. The temperature of the reactor was increased to 150°C for 30 minutes, and acetylation was performed for 3 hours. Then, the temperature was increased to 320°C for 4.5 hours while acetic acid, a byproduct, was discharged, and the temperature was maintained for 30 minutes, and then the products was discharged and pulverized. The weight loss initiating temperature and the melting point of the obtained low molecular weight polymer were measured, and the low molecular weight polymer was introduced into a solid state reactor, and the temperature was increased to the weight loss initiating temperature of 180°C for 30 minutes, and to the melting point of 320°C for 6 hours, and the temperature was maintained for 4 hours to obtain a high molecular weight polymer.

The obtained high heat resistant wholly aromatic polyester was mixed with glass fiber, etc. and the mixture was extruded and pelleted. Then, properties such as the melting point and the heat resisting temperature were measured.

The melting point was 350°C, and the heat resisting temperature was 290°C.

### Comparative Example 8

171 g of para hydroxy benzoic acid, 114 g of biphenol, and 100 g of terephtalic acid were introduced into a 1 liter reactor having a stirring device, a nitrogen gas inlet, a thermometer and a reflux condenser, and nitrogen was injected to substitute the air in the reactor. 264 g of anhydrous acetic acid was added thereto, and the reactor was stirred at a rotational frequency of 200 rpm. The temperature of the reactor was increased to 150°C for 30 minutes, and acetylation was performed for 3 hours. Then, the temperature was increased to 340°C for 5 hours while acetic acid, a byproduct, was discharged, and the temperature was maintained for 30 minutes, and then the products was discharged and pulverized. The weight loss initiating temperature and the melting point of the obtained low molecular weight polymer were measured, and the low molecular weight polymer was introduced into a solid state reactor, and the temperature was increased to 250°C which is higher than the weight loss initiating temperature for 30 minutes, and to the melting point of 330°C for 6 hours, and the temperature was maintained for 4 hours to obtain a high molecular weight polymer. The discharged high molecular weight polymer was adhered and discoloration to reddish brown occurred, and thus the properties were not evaluated.

### Comparative Example 9

A high heat resistant wholly aromatic polyester was prepared in the same manner as in Example 3, except that the heating time during the solid state reaction was altered as shown in Table 2. The discharged high molecular weight polymer was adhered and discoloration to reddish brown occurred, and thus the properties were not evaluated.

### Comparative Example 10

A high heat resistant wholly aromatic polyester was prepared in the same manner as in Example 3, except that the temperature of terminating the heating of the solid state reaction was altered as shown in Table 2.

**Table 2**

| | Low molecular weight polymer | | Solid state reaction | | High molecular weight polymer | | Amount of byproduct gas (relative), % | Discoloration |
|---|---|---|---|---|---|---|---|---|
| | Weight loss initiating temperature, °C | Melting point, °C | Heating time, hr | Holding time, hr | Melting point, °C | Heat resisting temperature, °C | | |
| Reference Example 3 | 200 | 330 | 6 | 4 | 410 | 385 | 0.5 | none |
| Reference Example 4 | 200 | 330 | 6 | 6 | 430 | 390 | 0.4 | none |
| Reference Example 5 | 200 | 330 | 6 | 2 | 390 | 380 | 0.8 | none |
| Reference Example 6 | 200 | 330 | 6 | 1 | 380 | 365 | 1.3 | none |
| Reference Example 7 | 180 | 320 | 6 | 4 | 350 | 325 | 0.7 | none |
| Comparative Example 8 | 250 | 330 | 6 | 4 | - | - | - | reddish brown |
| Comparative Example 9 | 200 | 330 | 2 | 4 | - | - | - | reddish brown |
| Comparative Example 10 | 200 | 300 | 6 | 4 | 350 | 320 | 3.0 | none |

As shown in Table 2, when the reaction was performed between the weight loss initiating temperature and the melting point according to Reference Examples, more excellent heat resistant property can be obtained due to the high melting point and the high heat resisting temperature compared to Comparative Examples in which the reaction was performed out of the temperature range. In addition, the amount of generated gas in Reference Examples was relatively lower and the discoloration did not occur.

A high heat resistant wholly aromatic polyester without discoloration can be prepared by controlling the range of reaction temperature during the solid state reaction, the heating rate and the reaction holding time. The high heat resistant wholly aromatic polyester can be used as polymer electronic materials requiring high strength, high heat resistance, and high precision due to such excellent properties.

### (Preparation of high heat resistant wholly aromatic polyester resin composition having improved fluidity)

A thermal and flow properties were measured using processes below.
a) The melting point was measured using a differential scanning calorimetry (2910 Modulated DSC, TA instruments). Here, the melting point is defined as follows. 10 mg of each of pulverized liquid crystal polyester resin was collected, and the temperature was maintained at 20°C higher than the temperature of the top of the endothermic peak for 3 minutes, wherein the endothermic peak was obtained by increasing the temperature from 50°C at a heating rate of 10°C/min under nitrogen atmosphere (first stage). Continuously, the temperature is decreased to 50°C at a cooling rate of 10°C/min (second stage). Then, when the temperature reaches 50°C, the temperature is increased again to 470°C at the same heating rate (third stage) and the measuring is finished. The temperature of the top of the endothermic peak present in the third stage is determined as the melting point.
b) The melting viscosity was measured using a Capillary Rheometer (Gottfert Capillary Rheometer Corporation, Rheograph). The melting viscosity was measured in the die with diameter of 0.5 mm at a shear stress velocity of 1000/sec. The melting point was measured at a temperature 20°C higher than the melting point defined in operation a).
c) The deflection temperature under load was measured using a piece of a molded article having the length of 127 mm, the width of 12.7 mm, and the thickness of 6.4 mm under the load of 1.85 MPa using a ASTM D648.

### Preparation Example 1

Para hydroxy benzoic acid, biphenol, and terephtalic acid were introduced into a 1 liter reactor in the ratio of 50 mol% : 25 mol% : 25 mol%, 1.06 equivalent weight of anhydrous acetic acid was introduced thereto, and 0.01% by weight of an organic metal salt was introduced thereto, and then the mixture was stirred. The reactor was preheated to 150°C, and polymerization was performed at 315°C at 100 rpm for 30 minutes, and acetic acid, a byproduct, was distilled. Then, the mixture was discharged, pulverized, and introduced into a solid state reactor. The solid state polymerization was performed at 325°C for 1 hour to obtain high heat resistant aromatic liquid crystal polyester resin (LCP A). The melting point which was measured using the method of operation a) of the obtained resin was 400°C.

### Preparation Example 2

Para hydroxy benzoic acid, biphenol, terephtalic acid, and isophthalic acid were introduced into a 1 liter reactor in the ratio of 60 mol% : 20 mol% : 15 mol% : 5 mol%, 1.06 equivalent weight of anhydrous acetic acid was introduced thereto, and 0.01% by weight of an organic metal salt was introduced thereto, and then the mixture was stirred. The reactor was preheated to 150°C, and polymerization was performed at 310°C at 100 rpm for 30 minutes, and acetic acid, a byproduct, was distilled. Then, the mixture was discharged, pulverized, and introduced into a solid state reactor. The solid state polymerization was performed at 320°C for 1 hour to obtain high heat resistant aromatic liquid crystal polyester resin (LCP B). The melting point which was measured using the method of operation a) of the obtained resin was 350°C.

### Reference Examples 8 to 10

Liquid crystal polyester resins obtained in Preparation Examples 1 and 2 was premixed with inorganic filler (glass fiber having the diameter of 14 µm and the length of 3 mm) in a ratio described in Table 3. The mixture was extruded at the cylinder temperature of 420°C using a twin screw extruder (Dr. Collin Corporation, ZK25) and pelleted to obtain a liquid crystal polyester resin composition. The properties of the liquid crystal polyester resin composition were measured using methods of operations b) and c), and the results are shown in Table 3.

### Comparative Examples 11 and 12

Liquid crystal polyester resins obtained in Preparation Examples 1 and 2 was premixed with inorganic filler (glass fiber having the diameter of 14 µm and the length of 3 mm) in a ratio described in Table 3. The mixture was extruded at the cylinder temperature of 420°C using a twin screw extruder (Dr. Collin Corporation, ZK25) and pelleted to obtain a liquid crystal polyester resin composition. The properties of the liquid crystal polyester resin composition were measured using methods of operations
b) and
c) c), and the results are shown in Table 3.

**Table 3**

| | Ratio of components | | Thermal transformation, °C | Reflow Soldering^{*2} | Property of fluidity | | |
|---|---|---|---|---|---|---|---|
| | Resin, wt% | Inorganic Filler*¹, wt% | | | Melt viscosity*³ (Pa·sec) | | Melt viscosity ratio*⁴ |
| | | | | | Resin composition | LCP A | |
| Reference Example 8 | LCP A:LCP B = 90:10 | 30 | 340 | O | 42 | 72 | 0.58 |
| Reference Example 9 | LCP A:LCP B = 80:20 | 30 | 336 | O | 36 | 72 | 0.50 |
| Reference Example 10 | LCP A:LCP B = 70:30 | 30 | 330 | O | 31 | 72 | 0.43 |
| Comparative Example 11 | LCP A:LCP B = 100:0 | 30 | 351 | O | 72 | 72 | 1 |
| Comparative Example 12 | LCP A:LCP B = 0:100 | 30 | 284 | X | - | - | - |

| | | | | | | | |
|---|---|---|---|---|---|---|---|
| *1. The ration of the inorganic filler is based on the total weight of the resin Composition *2. The reflow soldering is tested at 300°C. *3. The melt viscosity was measured at the shear stress of 1000/sec at 20°C higher than the melting point of LCP A. *4. The melt viscosity ratio (at the shear stress of 1000/sec)= the melt viscosity of resin composition/the melt viscosity of LCP A. Fluidity was evaluated based on this equation, and it is considered that fluidity increases as the melt viscosity ratio decreases. | | | | | | | |

As shown in Table 3, the property of heat resistance was excellent and fluidity was improved when the resin composition was used. Accordingly, a high heat resistant property liquid crystal polyester resin composition having improved fluidity can be prepared as a material to form optical pick up parts, etc. In addition, a resin composition which is sufficiently stable during the soldering of optical pick up parts.

A high heat resistant liquid crystal polyester resin having improved fluidity can be prepared by regulating the composition.

High heat resistant optical pick up parts having improved fluidity using the composition can be prepared.

In addition, a resin composition having excellent heat resistant property during soldering can be prepared. That is, a composition which has excellent heat resistant property required during soldering and improved fluidity required when the composition is used to form optical pick up parts can be prepared.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of preparing wholly aromatic polyester comprising acetylation and esterification, the method comprising:
a) mixing monomers such as aromatic hydroxyl carboxylic acids, aromatic diols, aromatic dicarboxylic acids and anhydrous acetic acid as an acylating agent, introducing the mixed monomers into a reactor having a rectangular or trapezoidal plate type stirring impeller, and melt polymerizing the introduced monomers through esterification at a heating rate of 0.5 ∼ 1.5°C/min with a power per unit volume of 10 ∼ 60 kW/m³, wherein a length (L) to diameter (D) ratio of the stirring impeller is 1 ∼ 3 : 1, and a distance between the bottom of the reactor and a lower portion of the stirring impeller is 1/100 ∼ 1/15 times of the diameter (D);
b) pulverizing the obtained polymer; and
c) solid state polymerizing the pulverized polymer.

2. The method of claim 1, wherein the wholly aromatic polyester is prepared through dehydration/condensation reactions by mixing para hydroxy benzoic acid represented by Formula 1, biphenol represented by Formula 2, terephthalic acid represented by Formula 3, isophthalic acid represented by Formula 4, and anhydrous acetic acid represented by Formula 5,

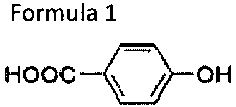

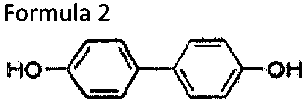

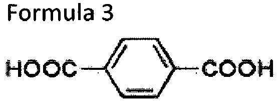

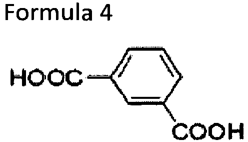

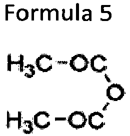

3. The method of claim 1, wherein the plate type stirring impeller is a double plate type impeller comprising an auxiliary blade.

4. The method of claim 1 or 3, wherein the plate type stirring impeller comprises a rectangular or circular hole.

5. The method of claim 4, wherein the plate type stirring impeller is driven by an inverter motor to maintain a uniform power per unit volume of the reaction mixture.

## Patentansprüche

1. Verfahren zur Herstellung eines vollaromatischen Polyesters umfassend Acetylierung und Veresterung, wobei das Verfahren umfasst:
a) Mischen von Monomeren, wie aromatischen Hydroxycarbonsäuren, aromatischen Diolen, aromatischen Dicarbonsäuren und anhydrischen Essigsäuren als Acylierungsmittel, Einbringen der gemischten Monomere in einen Reaktor mit einem rechteckigen oder trapezförmigen Platten-Rührwerk, und Schmelzpolymerisieren der eingebrachten Monomere durch Veresterung bei einer Heizrate von 0,5 ∼ 1,5 °C/min mit einer Leistung pro Volumeneinheit von 10 ∼ 60 kW/m³, wobei ein Verhältnis von Länge (L) zu Durchmesser (D) des Rührwerks 1 ∼ 3 : 1 beträgt, und ein Abstand zwischen dem Boden des Reaktors und einem unteren Abschnitt des Rührwerkes 1/100 ∼ 1/15 mal dem Durchmesser (D) beträgt;
b) Pulverisieren des erhaltenen Polymers; und
c) Festphasenpolymerisieren des pulverisierten Polymers.

2. Verfahren nach Anspruch 1, **dadurch gekennzeichnet, dass** der vollaromatische Polyester durch Dehydrations-/Kondensationreaktionen hergestellt ist, indem para-Hydroxybenzoesäure, dargestellt durch Formel 1, Biphenyl, dargestellt durch Formel 2, Terephthalsäure, dargestellt durch Formel 3, Isophthalsäure, dargestellt durch Formel 4, und anhydrische Essigsäure, dargestellt durch Formel 5, gemischt werden.

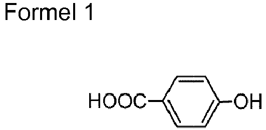

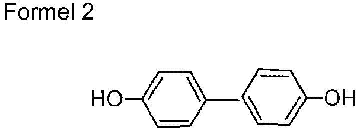

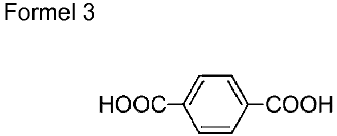

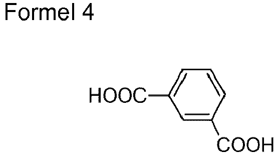

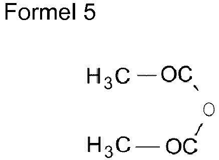

3. Verfahren nach Anspruch 1, **dadurch gekennzeichnet, dass** das Platten-Rührwerk ein Doppel-Platten-Rührwerk ist und eine Zusatzplatte umfasst.

4. Verfahren nach Anspruch 1 oder 3, **dadurch gekennzeichnet, dass** das Platten-Rührwerk ein rechteckiges oder kreisförmiges Loch umfasst.

5. Verfahren nach Anspruch 4, **dadurch gekennzeichnet, dass** das Platten-Rührwerk durch einen Invertermotor angetrieben ist, um eine gleichmäßige Leistung pro Volumeneinheit des Reaktionsgemisches aufrechtzuerhalten.

## Revendications

1. Procédé de préparation de polyester entièrement aromatique comprenant une acétylation et une estérification, le procédé comprenant :
a) le mélange de monomères tels que des acides carboxyliques hydroxylés aromatiques, des diols aromatiques, des acides dicarboxyliques aromatiques, et d'un acide acétique anhydre comme agent d'acylation, l'introduction des monomères mélangés dans un réacteur ayant une palette d'agitation de type plaque rectangulaire ou trapézoïdale, et la polymérisation à l'état fondu des monomères introduits par estérification à un taux de chauffage de 0,5 ∼ 1,5 °C/min avec une puissance par unité de volume de 10 ∼ 60 kW/m³, dans lequel un rapport longueur (L) sur diamètre (D) de la palette d'agitation est de 1 ∼ 3:1, et une distance entre le fond du réacteur et une partie inférieure de la palette d'agitation est de 1/100 ∼ 1/15 fois le diamètre (D) ;
b) la pulvérisation du polymère obtenu ; et
c) la polymérisation à l'état solide du polymère pulvérisé.

2. Procédé selon la revendication 1, dans lequel le polyester entièrement aromatique est préparé par des réactions de déshydratation/condensation par mélange d'acide para hydroxy benzoïque représenté par la Formule 1, de biphénol représenté par la Formule 2, d'acide téréphtalique représenté par la Formule 3, d'acide isophtalique représenté par la Formule 4 et d'acide acétique anhydre représenté par la Formule 5,

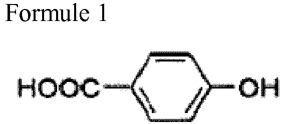

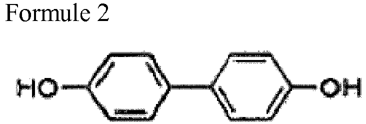

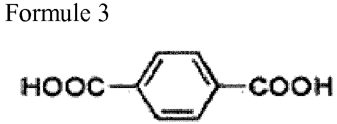

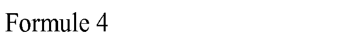

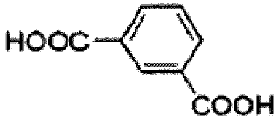

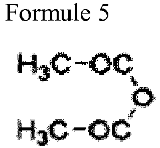

3. Procédé selon la revendication 1, dans lequel la palette d'agitation de type plaque est une palette de type double plaque comprenant une pale auxiliaire.

4. Procédé selon la revendication 1 ou 3, dans lequel la palette d'agitation de type plaque comprend un orifice rectangulaire ou circulaire.

5. Procédé selon la revendication 4, dans lequel la palette d'agitation de type plaque est commandée par un moteur inverseur pour maintenir une puissance uniforme par unité de volume du mélange réactionnel.
